# EUROPÄISCHE PATENTSCHRIFT

(11) **EP 2 270 349 B1**
(45) Veröffentlichungstag und Bekanntmachung des Hinweises auf die Patenterteilung: **09.05.2012**
(21) Anmeldenummer: 10167216.0
(22) Anmeldetag: 24.06.2010
(51) Int. Cl.: F16C 35/073, F16H 25/24

(54) **Kugelmutter eines Kugelgewindetriebes und Verfahren zur Herstellung einer solchen Kugelmutter**
Ball nut of a ball screw and method for producing said ball nut
Ecrou à billes d'une vis d'entraînement à billes et procédé de fabrication associé

(30) Priorität: 04.07.2009 DE 102009031711
(43) Veröffentlichungstag der Anmeldung: 05.01.2011
(73) Patentinhaber: Schaeffler Technologies AG & Co. KG, 91074 Herzogenaurach (DE)
(72) Erfinder: Meisborn, Marco, 91315 Höchstadt (DE); Adler, Dieter, 91074, Herzogenaurach (DE); Döppling, Wolfgang, 91086 Aurachtal (DE); Steinbinder, Horst, 96163 Gundelsheim (DE)

(56) Entgegenhaltungen:
- DE-T0- 10 193 475
- JP-A- 2006 316 976
- JP-A- 2007 009 940

## Beschreibung

### Gebiet der Erfindung

Die vorliegende Erfindung betrifft eine Kugelmutter eines Kugelgewindetriebes. Kugelgewindetriebe werden zur Umwandlung einer rotatorischen in eine translatorische Bewegung eingesetzt. Sie weisen eine auf einer Gewindespindel angeordnete Kugelmutter auf, wobei Kugeln entlang schraubenförmig gewundener Kugelrillen der Kugelmutter und der Gewindespindel unter Relativdrehung zwischen der Gewindespindel und der Kugelmutter abwälzen.

### Hintergrund der Erfindung

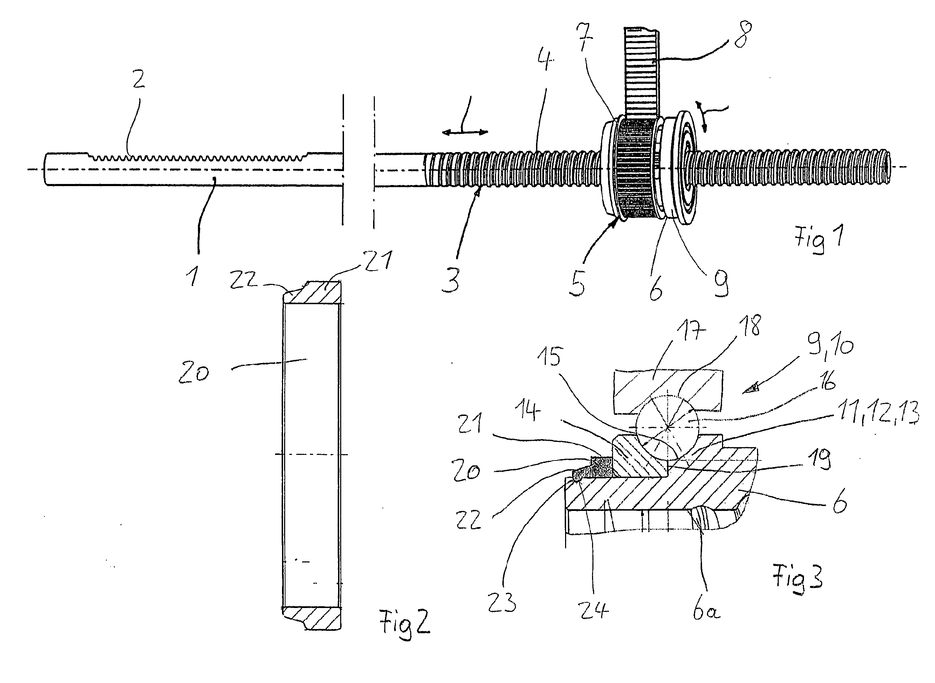

Aus der gattungsbildenden DE 101 93475 T1 ist eine elektrisch angetriebene Servo Lenkeinrichtung für Kraftfahrzeuge bekannt geworden, bei der eine Zahnstange einen Abschnitt aufweist, der als Gewindespindel ausgebildet ist. Figur 2 zeigt einen teilweisen Längsschnitt der Zahnstangenlenkung, wobei eine Kugelmutter drehbar auf der Gewindespindel unter Zwischenschaltung von Kugeln gelagert ist. Die Zahnstange mit dem Abschnitt für die Gewindespindel ist in einem Gehäuse untergebracht. Die Kugelmutter ist über ein Rillenkugellager an diesem Gehäuse drehbar gelagert. Das Rillenkugellager weist einen Außenring sowie einen Innenring auf. Der Innenring des Rillenkugellagers ist einerseits an einer Schulter der Kugelmutter und andererseits an einem Stützring axial abgestützt. Auf diese Weise ist sichergestellt, dass der Innenring in beiden axialen Richtungen einwandfrei auf der Kugelmutter und die Kugelmutter somit einwandfrei im Gehäuse positioniert und gehalten ist. Der Stützring weist an seinem Innenumfang einen Gewindeabschnitt auf. Die Kugelmutter weist an ihrem freien Ende an ihrem Außenumfang einen weiteren Gewindeabschnitt auf, so dass der Stützring auf die Kugelmutter aufgeschraubt werden kann. Der Innenring des Rillenkugellagers ist zwischen der Schulter der Kugelmutter und dem Stützring axial eingespannt oder einwandfrei positioniert.

Insbesondere bei derartigen Lenkeinrichtungen muss sichergestellt sein, dass die Kugelmutter in beiden axialen Richtungen einwandfrei gehaltert ist. Bei dem aufgeschraubten Stützring besteht die Möglichkeit, dass sich aufgrund von Vibrationen die eingestellte Lage des Stützringes verändert, so dass der Innenring in den axialen Richtungen in unerwünschter Weise spielbehaftet ist. Zur Vermeidung einer derartigen unerwünschten Lageveränderung des Stützringes könnte eine modifizierte Verschraubung vorgesehen werden, die jedoch einen erhöhten Fertigungsaufwand erfordert. Alternativ könnte auch ein Wellensicherungsring vorgesehen werden, der in eine Umfangsnut der Kugelmutter eingreift. Nachteilig ist jedoch bei dieser Lösung, dass eine gegebenenfalls erforderliche axiale Vorspannung zwischen dem Wellensicherungsring und dem Innenring kaum zu realisieren ist.

### Aufgabe der Erfindung

Aufgabe der vorliegenden Erfindung war es, eine Kugelmutter eines Kugelgewindetriebes nach den Merkmalen des Oberbegriffs des Anspruchs 1 anzugeben, bei der der Innenring auf einfache Art und Weise einwandfrei auf der Kugelmutter positioniert werden kann.

### Zusammenfassung der Erfindung

Erfindungsgemäß wurde diese Aufgabe mit den Merkmalen des Anspruchs 1 gelöst. Der Stützring kann mittels geeigneter Umformverfahren, vorzugsweise durch Bördeln oder Rollieren derart plastisch verformt werden, dass er unter einer gegebenenfalls erwünschten axialen Vorspannung gegen den Innenring angedrückt ist und außerdem ohne weitere Maßnahmen einwandfrei auf der Kugelmutter angeordnet ist.

Formschlüssig bedeutet, dass umgeformtes Material des Stützringes in radialer Richtung überlappend mit wenigstens einem Abschnitt der Kugelmutter angeordnet ist. Formschlüssig kann auch bedeuten, dass umgeformtes Material der Kugelmutter in radialer Richtung überlappend mit wenigstens einem Abschnitt des Stützringes angeordnet ist.

Bei einer einfachen erfindungsgemäßen Ausgestaltung kann die Kugelmutter beispielsweise mit einer in Umfangsrichtung verlaufenden Rille versehen sein, in die umgeformtes Material des Stützringes eingreift, so dass der Stützring in den axialen Richtungen einwandfrei gehaltert ist. Anstelle einer Rille kann auch lediglich eine Schulter an der Kugelmutter vorgesehen sein, wobei umgeformtes Material des Stützringes an dieser Schulter in der einen axialen Stützrichtung anliegt. In der anderen axialen Richtung kann der Stützring an einer anderen Schulter der Kugelmutter abgestützt sein.

Ein besonderer Vorteil der erfindungsgemäßen Kugelmutter kann darin gesehen werden, dass eine gegebenenfalls gewünschte axiale Vorspannung zwischen dem Stützring und dem Innenring problemlos einstellbar ist, wie es insbesondere bei einem geteilten Innenring erforderlich sein kann. Wenn das Wälzlager beispielsweise als Rillenkugellager ausgebildet ist, kann der geteilte Innenring einen einstückig an die Kugelmutter angeformten Innenringteil sowie ein weiteres, separates Innenringteil aufweisen. Die Kugelrille zum Abwälzen für die Kugeln ist in diesem Fall an beiden Innenringteilen gemeinsam ausgebildet. Bei derartigen geteilten Innenringe sind die beiden Innenringteile oftmals unter axialer Vorspannung zueinander angeordnet. Der Stützring kann soweit auf die Kugelmutter aufgeschoben werden, bis die gewünschte axiale Vorspannung zwischen dem Stützring und dem Innenring und somit zwischen den beiden Innenringteilen eingestellt ist. Nun kann auf einfache Art und Weise Material des Stützringes in eine oder mehrere Ausnehmungen der Kugelmutter eingeformt werden, so dass der Stützring in der Stützrichtung formschlüssig gehaltert und abgestützt ist.

Bei einer bevorzugten erfindungsgemäßen Weiterbildung wird der Stützring an die Kugelmutter in einem Rolliervorgang anrolliert, wobei durch den Rolliervorgang umgeformtes Material des Stützringes in eine insbesondere durch eine Rille gebildete Ausnehmung der Kugelmutter eingeformt wird. Bei diesem Rolliervorgang wird der Stützring auf die Kugelmutter aufgeführt, dann wird ein geeignetes Rollierwerkzeug an den Stützring angefahren, schließlich wird durch Rollieren mit dem Rollierwerkzeug Material des Stützringes plastisch umgeformt wird.

Das Rollierwerkzeug kann mehrere über den Umfang des Stützringes verteilt angeordnete Rollen aufweisen, die unter radialer Belastung des Stützringes auf dem Außenumfang der Kugelmutter abwälzen, wobei unter der radialen Belastung Material des Stützringes plastisch verformt wird.

Bei einer weiteren bevorzugten erfindungsgemäßen Weiterbildung wird der Stützring an die Kugelmutter in einem Bördelvorgang angepresst, wobei durch den Bördelvorgang umgeformtes Material des Stützringes in eine insbesondere durch eine Rille gebildete Ausnehmung der Kugelmutter eingeformt wird

Bei einem Bördelvorgang wird ein gegebenenfalls mehrteiliges Werkzeug am Außenumfang des Stützringes angesetzt, wobei lediglich unter radialer und gegebenenfalls axialer Belastung Material des Stützringes plastisch umgeformt wird. Dieses plastisch umgeformte Material kann dann in die vorbereitete Ausnehmung der Spindelmutter formschlüssig eingreifen.

Infolge der Materialumformung kann an dem Stützring eine Schulter oder ein Bord ausgebildet sein, wobei diese Schulter oder dieser Bord formschlüssig in der axialen Stützrichtung an einem Abschnitt der Kugelmutter abgestützt ist.

Der Stützring weist einen dem Innenring zugewandten Schulterabschnitt als Abstützung für den Innenring sowie einen an den Schulterabschnitt anschließenden, gegenüber dem Schulterabschnitt verjüngten Umformabschnitt für die Umformung durch ein Umformwerkzeug auf. Der Umformabschnitt weist eine Dicke auf, die so bemessen ist, dass einerseits ein einwandfreies plastisches Umformen gewährleistet ist, wobei jedoch andererseits eine ausreichende stabile formschlüssige Abstützung in der axialen Stützrichtung gewährleistet ist.

### Kurze Beschreibung der Zeichnungen

Nachstehend wird die Erfindung anhand eines in insgesamt drei Figuren abgebildeten Ausführungsbeispieles näher erläutert. Es zeigen:
- Figur 1: einen Ausschnitt einer Zahnstangenlenkung eines Kraftfahrzeu- ges mit einer elektromechanischen Lenkhilfe, die mit einer erfin- dungsgemäßen Kugelmutter versehen ist,
- Figur 2: ein Einzelteil der erfindungsgemäßen Kugelmutter und
- Figur 3: eine Ausschnittsvergrößerung der Kugelmutter aus Figur 1.

### Ausführliche Beschreibung der Zeichnungen

Figur 1 zeigt einen Ausschnitt einer Zahnstangenlenkung eines Kraftfahrzeuges mit einer elektromechanischen Lenkhilfe. Eine Zahnstange weist einen ersten Abschnitt 1 mit einer Verzahnung 2 auf, und einen zweiten Abschnitt 3, der als Gewindespindel 4 ausgebildet ist. Ein an sich bekannter Kugelgewindetrieb 5 ist vorgesehen, der eine erfindungsgemäße Kugelmutter 6 mit einer darauf drehfest angeordneten Riemenscheibe 7 aufweist. Ein Zahnriemen 8 umschlingt die Riemenscheibe 7 und treibt die Kugelmutter 6 an.

Die Kugelmutter 6 ist an einem axialen Ende mit einem Wälzlager 9 versehen, dass deutlich in der Figur 3 abgebildet ist.

Figur 3 zeigt eine Ausschnittsvergrößerung der erfindungsgemäßen Kugelmutter 6. Dieser Abbildung ist zu entnehmen, dass die Kugelmutter 6 an ihrem Innenumfang mit einer schraubenförmig gewundenen Kugelrille 6a für hier nicht abgebildete Kugeln versehen ist. Die Kugeln stehen in Eingriff mit der Kugelmutter 6 sowie mit der Gewindespindel 4, so dass unter einer Rotation der Kugelmutter 6 eine axiale Verschiebung der Zahnstange gegenüber der Kugelmutter 6 erfolgt.

Die Kugelmutter 6 ist in einem hier nicht abgebildeten Gehäuse über das als Rillenkugellager 10 ausgebildete Wälzlager 9 radial gelagert. Über dieses Rillenkugellager 10 ist die erfindungsgemäße Kugelmutter 6 einwandfrei in beiden axialen Richtungen positioniert und gehalten.

Das Rillenkugellager 10 weist einen zweiteiligen Innenring 11 auf, dessen einer Innenringteil 12 durch eine einstückig an die Kugelmutter 6 angeformte Schulter 13 gebildet ist. Ein anderes Innenringteil 14 ist auf der Kugelmutter 6 angeordnet, das gemeinsam mit der Schulter 13 eine Kugelrille 15 für Kugeln 16 bildet. Das Rillenkugellager 10 weist ferner einen Außenring 17 auf, der an seinem Innenumfang mit einer weiteren Kugelrille 18 für die Kugeln 16 versehen ist.

Das Innenringteil 14 ist einerseits an einer Schulter 19 der Kugelmutter 6 und andererseits an einem Stützring 20 axial abgestützt. Das Innenringteil 14 ist in den axialen Richtungen spielfrei zwischen dem Stützring 20 und der Schulter 19 gehalten.

Der Stützring 20 weist einen dem Innenringteil 14 zugewandten Schulterabschnitt 21 auf, an dem das Innenringteil 14 axial abgestützt ist. Der Stützring 20 weist ferner einen an den Schulterabschnitt 21 anschließenden, gegenüber dem Schulterabschnitt 21 verjüngten Umformabschnitt 22 auf, wobei ein durch plastische Umformung des Umformabschnittes 22 ausgebildeter umlaufender Wulst 23 in eine Rille 24 der Kugelmutter 6 formschlüssig eingreift. Der formschlüssige Eingriff des durch plastische Umformung erzeugten Wulstes 23 in die Rille 24 gewährleistet eine einwandfreie Halterung des Stützringes 20 in der axialen Stützrichtung, also in Richtung weg von dem Innenringteil 14, und gegebenenfalls auch zusätzlich in der entgegen gesetzten axialen Richtung. Das Einformen des Wulstes 23 in die Rille 24 erfolgt, wenn die gewünschte axiale Vorspannung des Innenringes 11 eingestellt ist.

Figur 2 zeigt den Stützring 20 vor seiner plastischen Umformung, also bevor eine Materialumformung durchgeführt wurde. Der Figur ist deutlich zu entnehmen, dass der Umformabschnitt 22 noch nicht mit dem Wulst 23 versehen ist, wie er in der Figur 3 abgebildet ist. Der Stützring 20 wird - wie in der Figur 2 abgebildet - auf die Kugelmutter 6 aufgeführt und gegen das Innenringteil 14 angestellt. In der gewünschten axialen Position des Stützringes 20 wird nun der Umformabschnitt 22 plastisch verformt, so dass durch Materialumformung Material nach radial einwärts verdrängt wird.

Das Umformen ist vorliegend durch einen Rolliervorgang erfolgt. Zu diesem Zweck wurde ein hier nicht abgebildetes Rollierwerkzeug auf den bereits montierten Stützring 20 aufgesetzt. Dieses Rollierwerkzeug weist üblicherweise eine oder mehrere über den Umfang verteilt angeordnete Rollen auf, die unter radialer Belastung am Umfang der Kugelmutter abwälzen und schließlich Material des Umformabschnittes 22 derart plastisch verformen, dass der Wulst 23 gebildet ist.

### Bezugszeichen

- 1: erster Abschnitt
- 2: Verzahnung
- 3: zweiter Abschnitt
- 4: Gewindespindel
- 5: Kugelgewindetrieb
- 6: Kugelmutter
- 6a: schraubenförmige Kugelrille
- 7: Riemenscheibe
- 8: Zahnriemen
- 9: Wälzlager
- 10: Rillenkugellager
- 11: Innenring
- 12: Innenringteil
- 13: Schulter
- 14: Innenringteil
- 15: Kugelrille
- 16: Kugeln
- 17: Außenring
- 18: Kugelrille
- 19: Schulter
- 20: Stützring
- 21: Schulterabschnitt
- 23: Umformabschnitt
- 23: Wulst
- 24: Rille

## Patentansprüche

1. Kugelmutter (6) eines Kugelgewindetriebes (5), an deren Innenumfang eine schraubenförmig um die Längsachse gewundene Kugelrille (6a) zum Abwälzen von Kugeln vorgesehen ist, und an deren Außenumfang ein Wälzlager (9) zur drehbaren Lagerung der Kugelmutter (6) angeordnet ist, wobei das Wälzlager (9) einen Innenring (11) aufweist, der mittels eines auf der Kugelmutter (6) angeordneten Stützringes (20) in axialer Stützrichtung gestützt ist, wobei der Stützring (20) durch Materialumformung in der axialen Stützrichtung formschlüssig auf der Kugelmutter (6) angeordnet ist, und wobei der Innenring (11) geteilt ist, **dadurch gekennzeichnet, dass** ein Innenringteil (12) durch eine einstückig angeformte Schulter (13) der Kugelmutter (6) gebildet ist und wobei ein anderes Innenringteil (14) vorgesehen ist, und wobei der Stützring (20) einen dem Innenring (11) zugewandten Schulterabschnitt (21) als Abstützung für den Innenring (11) sowie einen an den Schulterabschnitt (21) anschließenden, gegenüber dem Schulterabschnitt (21) verjüngten Umformabschnitt (22) für die Umformung durch ein Umformwerkzeug aufweist, und wobei das Innenringteil (14) in den axialen Richtungen spielfrei zwischen dem Stützring 20 und der Schulter (13) gehalten ist.

2. Kugelmutter (6) nach Anspruch 1, bei der der Stützring (20) an die Kugelmutter (6) in einem Rolliervorgang anrolliert ist, wobei durch den Rolliervorgang umgeformtes Material des Stützringes (20) in eine insbesondere durch eine Rille (24) gebildete. Ausnehmung der Kugelmutter (6) eingeformt ist.

3. Kugelmutter (6) nach Anspruch 1, bei der der Stützring (20) an die Kugelmutter (6) in einem Bördelvorgang angebördelt ist, wobei durch den Bördelvorgang umgeformtes Material des Stützringes (20) in eine insbesondere durch eine Rille (24) gebildete Ausnehmung der Kugelmutter (6) eingeformt ist.

4. Kugelmutter (6) nach Anspruch 1, bei der das umgeformte Material als Schulter, Wulst (23) oder Bord ausgebildet ist.

5. Verfahren zur Herstellung einer Kugelmutter (6) nach Anspruch 1, bei dem der Innenring (11) und der Stützring (20) auf der Kugelmutter (6) angeordnet werden, und bei dem durch Rollieren Material des Stützringes plastisch umgeformt wird.

6. Verfahren zur Herstellung einer Kugelmutter (6) nach Anspruch 1, bei dem der Innenring (11) und der Stützring (20) auf der Kugelmutter (6) angeordnet werden, und bei dem durch Bördeln Material des Stützringes (11) plastisch umgeformt wird.

## Claims

1. Ball nut (6) of a ball screw (5), on the inner circumference of which ball screw a ball groove (6a) wound helically around the longitudinal axis is provided for the rolling of balls and on the outer circumference of which ball screw a rolling bearing (9) is arranged for the rotatable mounting of the ball nut (6), the rolling bearing (9) having an inner ring (11) which is supported in the axial supporting direction by means of a supporting ring (20) arranged on the ball nut (6), the supporting ring (20) being arranged with a form fit on the ball nut (6) in the axial supporting direction as a result of the forming of material, and the inner ring (11) being divided, **characterized in that** one inner-ring part (12) is formed by an integrally formed shoulder (13) of the ball nut (6), and another inner-ring part (14) being provided, and the supporting ring (14) having a shoulder portion (21) facing the inner ring (11), as support for the inner ring (11), and a formed portion (22) adjoining the shoulder portion (21) and tapered with respect to the shoulder portion (21), for forming by a forming die, and the inner-ring part (14) being held, free of play in the axial directions, between the supporting ring (20) and the shoulder (13).

2. Ball nut (6) according to Claim 1, in which the supporting ring (20) is tumbled onto the ball nut (6) in a tumbling operation, material, formed as a result of the tumbling operation, of the supporting ring (20) being introduced into a recess, formed particularly by a groove (24), of the ball nut (6).

3. Ball nut (6) according to Claim 1, in which the supporting ring (20) is crimped onto the ball nut (6) in a crimping operation, material, formed as a result of the crimping operation, of the supporting ring (20) being introduced into a recess, formed particularly by a groove (24), of the ball nut (6).

4. Ball nut (6) according to Claim 1, in which the formed material is shaped as a shoulder, bead (23) or rim.

5. Method for producing a ball nut (6) according to Claim 1, in which the inner ring (11) and the supporting ring (20) are arranged on the ball nut (6), and in which material of the supporting ring is formed plastically as a result of tumbling.

6. Method for producing a ball nut (6) according to Claim 1, in which the inner ring (11) and the supporting ring (20) are arranged on the ball nut (6), and in which material of the supporting ring (11) is formed plastically as a result of crimping.

## Revendications

1. Ecrou à bille (6) d'une vis d'entraînement à billes (5), sur la périphérie interne duquel est prévu une gorge de roulement (6a) enroulée en hélice autour de l'axe longitudinal pour le roulement de billes, et sur la périphérie externe duquel est disposé un palier à roulement (9) pour le support sur palier rotatif de l'écrou à bille (6), le palier à roulement (9) présentant une bague interne (11) qui est supportée dans la direction de support axiale au moyen d'une bague de support (20) disposée sur l'écrou à bille (6), la bague de support (20) étant disposée par engagement par coopération de forme sur l'écrou à bille (6) par déformation de matériau dans la direction de support axiale, et la bague interne (11) étant divisée, **caractérisé en ce qu'**une partie de bague interne (12) est formée par un épaulement (13) façonné d'une seule pièce de l'écrou à bille (6) et une autre partie de bague interne (14) étant prévue, la bague de support (20) présentant une portion d'épaulement (21) tournée vers la bague interne (11) en tant qu'appui pour la bague interne (11), ainsi qu'une portion de déformation (22) rétrécie par rapport à la portion d'épaulement (21), se raccordant à la portion d'épaulement (21), en vue de la déformation par un outil de déformation, et la partie de bague interne (14) étant maintenue dans les directions axiales sans jeu entre la bague de support (20) et l'épaulement (13).

2. Ecrou à bille (6) selon la revendication 1, dans lequel la bague de support (20) est laminée contre l'écrou à bille (6) dans une opération de laminage, le matériau de la bague de support (20) déformé par l'opération de laminage étant mis en forme dans un évidement de l'écrou à bille (6) constitué notamment par une gorge (24).

3. Ecrou à bille (6) selon la revendication 1, dans lequel la bague de support (20) est rabattue contre l'écrou à bille (6) dans une opération de rabattage, le matériau de la bague de support (20) déformé par l'opération de rabattage étant mis en forme dans un évidement de l'écrou à bille (6) constitué notamment par une gorge (24).

4. Ecrou à bille (6) selon la revendication 1, dans lequel le matériau déformé est réalisé sous forme d'épaulement, de bourrelet (23) ou de rebord.

5. Procédé de fabrication d'un écrou à bille (6) selon la revendication 1, dans lequel la bague interne (11) et la bague de support (20) sont disposées sur l'écrou à bille (6), et dans lequel le matériau de la bague de support est déformé plastiquement par laminage.

6. Procédé de fabrication d'un écrou à bille (6) selon la revendication 1, dans lequel la bague interne (11) et la bague de support (20) sont disposées sur l'écrou à bille (6), et dans lequel le matériau de la bague de support est déformé plastiquement par rabattage.
